# EUROPEAN PATENT APPLICATION

(11) **EP 2 109 210 A2**
(43) Date of publication of application: **14.10.2009**
(21) Application number: 09009724.7
(22) Date of filing: 28.07.2009
(51) Int. Cl.: H02K 53/00

(54) **Uninterrupted battery operated generator system**

(30) Priority: 24.04.2009 MY 0901670; 27.06.2009 MY 0902496
(71) Applicant: Green-Tech Holdings Sdn Bhd, 55100 Kuala Lumpur (MY)
(72) Inventor: Teoh, Chin Song, Cheras, Kuala Lumpur (MY); Teoh, De Zheng, Cheras, Kuala Lumpur (MY)
(74) Representative: Boyce, Conor

(57) **Abstract**

The uninterrupted battery operated generator system 50 of the present invention generates electrical and kinetic energy without using fossil fuel or external energy sources to recharge. It uses two sets of energy storage means 11, 12 alternatively, to power a rotational torque generating means 15. The rotational torque generating means 15 drives the rotational movement of a flywheel 31 coupled to gyroscopes 35, which store and multiply kinetic energy. An alternator 16 is driven by the rotational torque generating means to convert this kinetic energy into electrical energy. The flywheel 31 can also be fitted with a rail 42 engaging with a transmission roller 43 to transfer the kinetic energy via a transmission shaft 44 to a receiving system such as a vehicular or machinery transmission system. Some of the electrical energy generated can be used to recharge the energy storage means 11, 12, which have a charging time shorter than the operating time. A controller 10 connected to load sensor 19, voltage sensor 13, and frequency sensor 14 controls the power supply to the rotational torque generating means 15, thereby enhancing the energy efficiency, thus creating an uninterrupted battery operated generator system 50.

## Description

### Background of the Invention

### Field of the Invention

This invention relates to an uninterrupted battery operated generator system that utilises a flywheel and gyroscopes to store and multiply kinetic energy, which is then converted into electrical energy. The uninterrupted battery operated generator system of the present invention also generates kinetic energy from electrical energy. The uninterrupted battery operated generator system of the present invention provides means for generating electrical and kinetic energy for application in various machinery and electrical appliances including electric vehicles, motorbikes, boats, aeroplanes and the like.

### Description of Related Arts

There are several conventional methods of power generation, each with different cost structures, project lead times, advantages and disadvantages. Conventional methods of power generation include thermal plants, gas turbines and hydroelectric power stations. Thermal plants use fossil oil or coal as feedstock but the burning of fossil fuel emits pollutants. Gas turbines have much shorter lead time from planning, commissioning to operation, but both the capital cost per MVA and the operating cost are relatively high. Again, there are environmentally polluting emissions from the combustion of gaseous hydrocarbon such as methane or the like. In power generation using hydroelectric power, lead time is lengthy and capital cost enormous, due to the colossal size of projects of this nature which involve substantial civil engineering works in generally remote areas. In Malaysia, there are limited sites with consistent ten-year hydrology data that support feasibility of planting hydropower stations except in the state of Sarawak. Another shortcoming of hydropower plants is that they are generally located in remote jungles, necessitating long transmission lines in delivering loads to distant load centres, which add to costs.

Alternatively, environmentally friendly sources of power such as wind and solar power may be exploited. The adoption of photovoltaic technology to convert solar energy into electricity is hampered by the high cost of photovoltaic arrays. The use of wind power to generate electricity is also not feasible in some locations. Wind mapping must first be carried out to determine if a location is suitable for harnessing wind power. The locations found suitable to harness wind power may not coincide with the location where power is required.

Various electrical generators are known in the prior art. Conventional gasoline or diesel power generators require the use of fossil fuel, which has a negative environmental impact. When in operation, conventional power generators also cause air and noise pollution due to fuel combustion, thus compounding the environmental problems associated with such generators. Battery operated generators have been invented to solve some of these problems. For example, US 2007/0216247 A1 patent disclosed an automatic motor-generator charger that includes a motor-generator and a circuit unit integrated together in a case. The motor-generator in said invention receives electric power from a battery. The circuit unit selectively supplies this electric power to a motor winding of the motor-generator. The batteries are charged in accordance with the electricity generating operation of the motor-generator. This cited invention does not require the use of fossil fuel but requires continuous electrical energy supply from the battery to its motor-generator. It does not provide kinetic energy to drive vehicular transmission and other machinery. It also does not provide means for the input energy to be multiplied and thus has limited energy efficiency.

### Summary of Invention

It is the objective of the present invention to provide a power generation system that does not utilise fossil fuel or gaseous hydrocarbon, thereby avoiding emissions of pollutants into the environment.

It is another objective of the present invention to provide a cost effective power generation system to supply power to remote areas with dispersed load centres, particularly where the infrastructure cost of bringing power to the load centre, whether power plant or transmission system, is economically unjustifiable.

It is yet another objective of the present invention to provide a power generation system that would supply power reliably without outages.

It is a further objective of the present invention to provide a power generation system involving the use of gyroscopes to increase the rotational torque on a rotating flywheel to store and multiply kinetic energy, which can be converted into electrical energy.

It is also an objective of the present invention to provide a power generation system whereby said system can replace conventional electric generators for supplying power to a variety of electrical appliances, including vehicles.

It is also an objective of the present invention to provide a power generation system to generate kinetic power for use in vehicular transmission systems or other machinery.

The objectives above can be achieved by using the uninterrupted battery operated generator system of the present invention. The uninterrupted battery operated generator system comprises at least two energy storage means, a rotational torque generating means, a flywheel, a plurality of gyroscopes, a rail, a plate, a transmission roller, an alternator, a voltage sensor, a load sensor, a frequency sensor, a charging means, a controller, a set of switches and an on-off switch. The rotational torque generating means is driven by the energy storage means to rotate the flywheel and gyroscopes, which store and multiply kinetic energy. This kinetic energy is translated into the rotation of the rotor of the alternator to generate electrical power. Since the gyroscopes increase the inertia force of the flywheel while the gyroscopes and flywheel are in motion, this will increase the rotational speed of the flywheel and thus increase the amount of kinetic energy that can be translated to the rotor of the alternator. This enables the reduction of the amount of chemical energy consumed in the energy storage means to power the rotational torque generating means. Therefore, a key feature of the invention is the flywheel coupled with gyroscopes, which enable the rotational frequency of the flywheel to be multiplied when it is in motion. A rail fixed to the rim of the flywheel transfers the kinetic energy of the rotating flywheel to a transmission roller, which then transfers the kinetic energy to a receiving system such as a car transmission system. When the first energy storage means is exhausted after a period of operation, the second energy storage means will take over to supply energy to the rotational torque generating means. In the meantime, the power of the first energy storage means is restored by the charging means drawing power from that produced by the alternator. Therefore, another key feature of the invention is that the energy storage means has a charging time that is much shorter than the operating time. A controller is incorporated for controlling the operation of the uninterrupted battery operated generator system. The controller controls the switching between energy storage means and enabling of the charging means through the opening and closing of a set of control switches. The controller also controls the on-off supply of energy from the energy storage means to the rotational torque generating means as and when needed. The voltage sensor, the load sensor and the frequency sensor provide the necessary signals for the controller on switching logic decision.

### Brief Description of the Drawings

The features and usefulness of the invention will be more readily understood and appreciated from the following detailed description when read in conjunction with the accompanying drawing, in which:
Fig.1 is a perspective view of the uninterrupted battery operated generator system.
Fig.2 is a diagram of the uninterrupted battery operated generator system.
Fig.3 is a cross sectional view of the energy generator, including means for transferring kinetic energy to a receiving system.
Fig. 4 is a cross sectional view of the energy generator, including an alternative means for transferring kinetic energy to a receiving system.
Fig.5 is a side view of the flywheel and gyroscopes when the flywheel is at rest, including means for transferring kinetic energy to a receiving system.
Fig.6 is a side view of the flywheel and gyroscopes when the flywheel is in motion, including means for transferring kinetic energy to a receiving system.
Fig. 7 is a top view of the flywheel and gyroscopes, including means for transferring kinetic energy to a receiving system.

### Detailed Description of the Invention

The invention will now be described with reference to the accompanying drawing. In accordance with the present invention, it is provided an uninterrupted battery operated generator system 50.

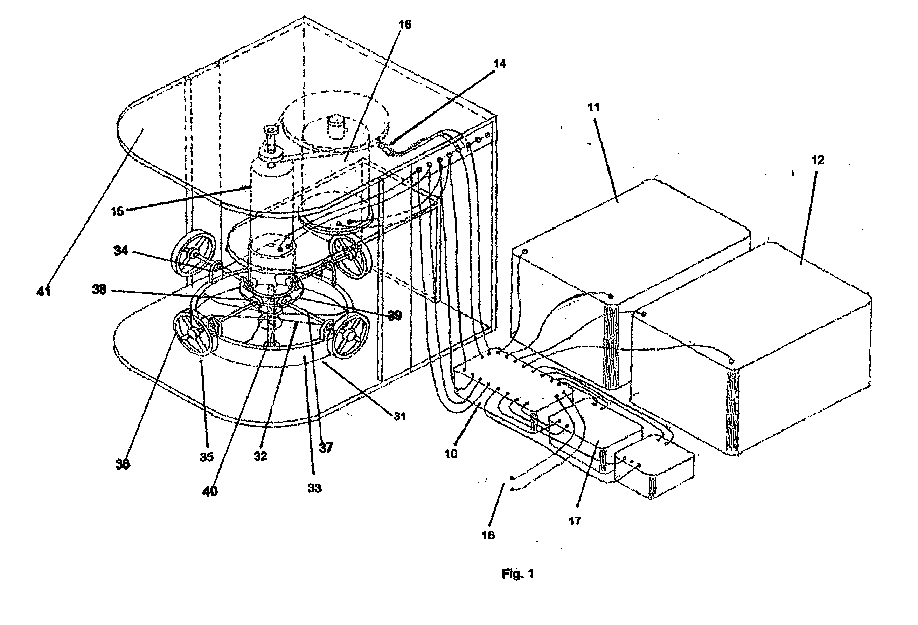

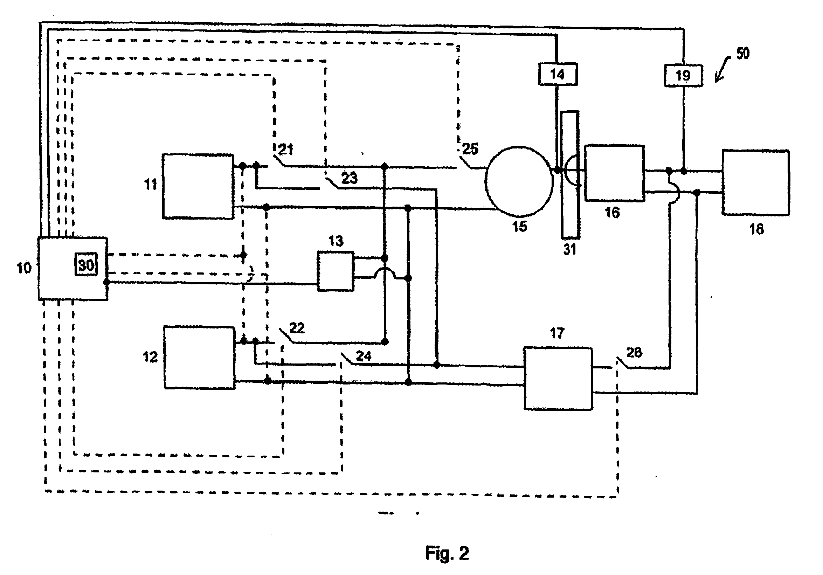

Referring to Figs. 1 to 3, the uninterrupted battery operated generator system 50 comprises an alternator 16, a rotational torque generating means 15 to drive the rotor of the alternator 16, energy storage means 11, 12 to provide electrical input to the rotational torque generating means 15, a voltage sensor 13 to monitor the voltage across the energy storage means 11, 12, a frequency sensor 14 to measure the rotational speed of the rotor of the alternator 16, a charging means 17 for charging the energy storage means 11, 12, a load sensor 19 to detect load condition, a controller 10 for controlling the operation of the uninterrupted battery operated generator system 50 together with the attendant operation control switches 21, 22, 23, 24, 25 and 26 and an on-off switch 30 for the user to switch on and off of the uninterrupted battery operated generator system 50.

The energy storage means 11, 12 are preferably DC battery banks of predetermined rating or capacity in ampere hour. More particularly, the DC battery banks are of the type with much shorter recharge time than the operating time. The energy storage means 11, 12 may also be other devices capable of storing electrical energy or charges such as ultra-capacitor, super-capacitor and the like. The energy storage means 11, 12 provide the electrical input for the operation of the rotational torque generating means 15.

The voltage sensor 13 is connected across the energy storage means 11, 12, via the input voltage across the rotational torque generating means 15 to monitor the voltage across the first or second energy storage means 11 or 12. The preferred embodiment of the voltage sensor 13 is an under voltage relay. The rotational torque generating means 15 may be a DC motor or an AC motor complete with an inverter.

The frequency sensor 14 measures the rotational speed of the rotor of the alternator 16. The load sensor 19 measures the load current drawn by load 18, excluding the load drawn by the charging means 17. The load sensor 19 may be a current transformer.

The outputs of voltage sensor 13, the frequency sensor 14 and the load sensor 19 are connected to the input ports of the controller 10 to provide inputs for the controller 10 to determine the command to be sent to the appropriate devices to control operation of the uninterrupted battery operated generator system 50.

With the signals received on the input ports, the controller 10 controls the operation of the uninterrupted battery operated generator system 50 by executing the necessary commands to the closing and opening of various switches as will be described later. The controller 10 has one input port electrically connected to an on-off switch 30 that receives command from the user with respect to turning on and off of the uninterrupted battery operated generator system 50. The controller 10 has three input ports electrically connected to receive the outputs of the voltage sensor 13, the frequency sensor 14 and the load sensor 19 respectively. The controller 10 is adapted to monitor and compare the voltage as measured by the voltage sensor 13 against a predefined under voltage condition designed or pre- programmed into the controller 10. The controller 10 is also adapted to monitor and compare the rotational speed as measured by the frequency sensor 14 against a predefined frequency condition designed or pre-programmed into the controller 10. The controller 10 is further adapted to monitor and compare the current as measured by the load sensor 19 against a predefined current condition designed or pre-programmed into the controller 10. The controller 10 can be a discrete digital circuit, a discrete analogue circuit, a hybrid discrete analogue and digital circuit, a digital microprocessor or a digital microcontroller. The controller 10 includes a comparator to compare the voltage as measured by the voltage sensor 13 to a predefined under voltage condition. The controller 10 has a plurality of output ports to control the opening and closing of the switches 21 to 26. The controller may have an internal power source such as DC battery or may derive power source to operate the controller 10 from the energy storage means 11, 12.

The energy storage means 11, 12 are connected in parallel to the input terminals of the rotational torque generating means 15 via supply switches 21, 22 respectively. The supply switches 21, 22, which are controlled by the controller 10, are designed or pre-programmed to interlock with one another, preferably electrically, so that the energy storage means 11, 12 will not be connected simultaneously to the rotational torque generating means 15. The shaft 40 of the rotational torque generating means 15 is mechanically coupled to the rotor of the alternator 16 by a belt and pulley transmission system or gear driven system. One end of the shaft 40 of the rotational torque generating means 15 is preferably fixed to the top of a confinement 41 enclosing the uninterrupted battery operated generator system 50 such as to provide stability when the uninterrupted battery operated generator system 50 is in operation. This connection between the shaft 40 of the rotational torque generating means 15 to the confinement 41 may include the use of bearings to act as a pivot point for the axis of rotation of the flywheel 31 and to allow the rotary motion of the shaft 40 of the rotational torque generating means 15 when the uninterrupted battery operated generator system 50 is in operation. The second end of the shaft 40 of the rotational torque generating means 15 may be fixed to the bottom of the confinement 41 in a similar manner or any other manner such as to provide stability and allow the rotary motion of the shaft 40 of the torque generating means 15.

The alternator 16 can be a single-phase or three-phase alternator or permanent magnet alternator with its rotor coupled to the shaft 40 of the rotational torque generating means 15 through a suitable transmission system including a belt and pulley transmission system or a gear driven system. Further, the rating of the rotational torque generating means 15, in horse power, is relatively smaller than that of the alternator 16.

The charging means 17 is connected to the output of the alternator 16 via a charging switch 26. The opening and closing of the charging switch 26 is controlled by the controller 10. The controller 10 sends a command to open the charging switch 26 when a full load is needed.

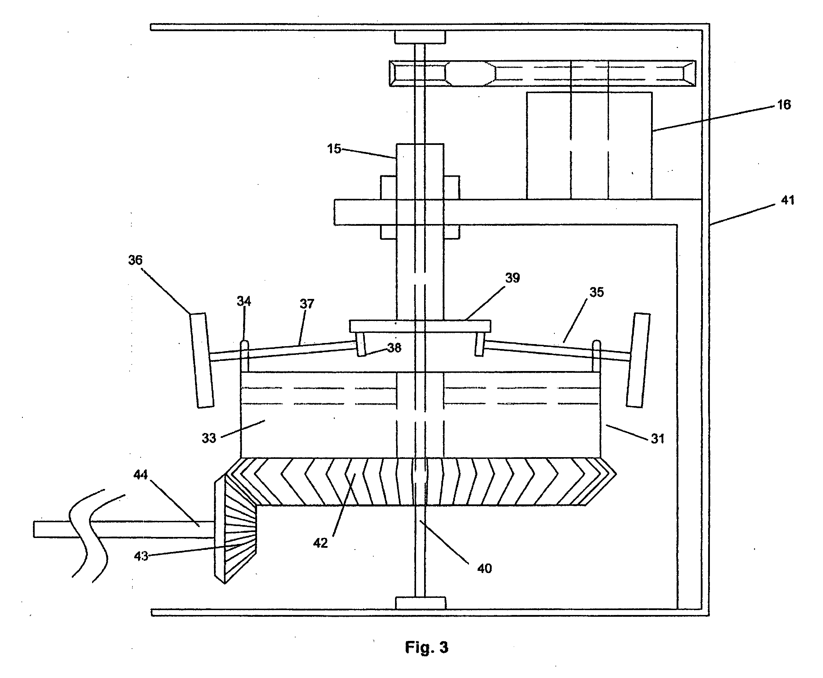

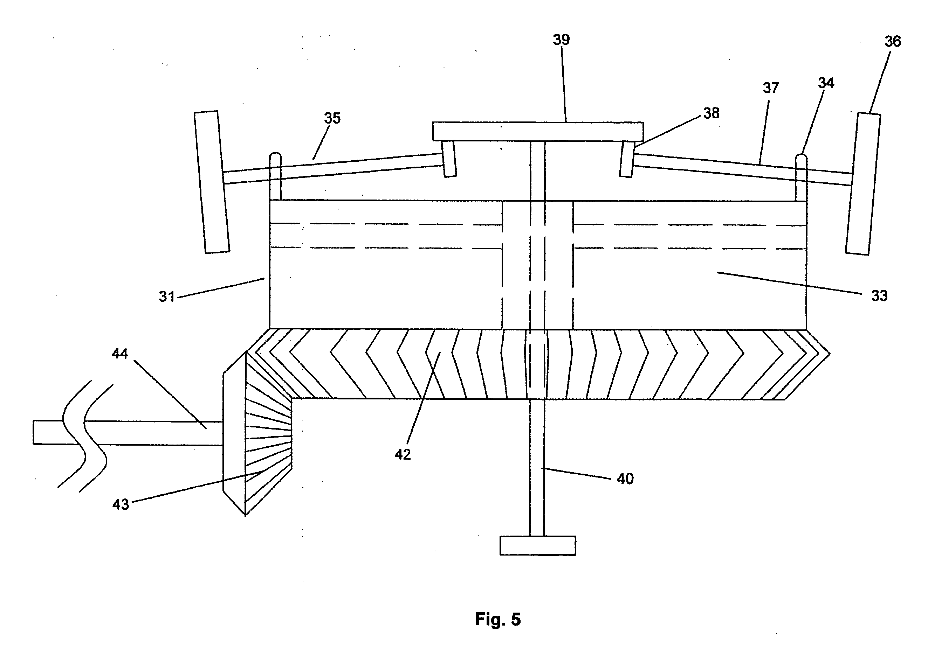

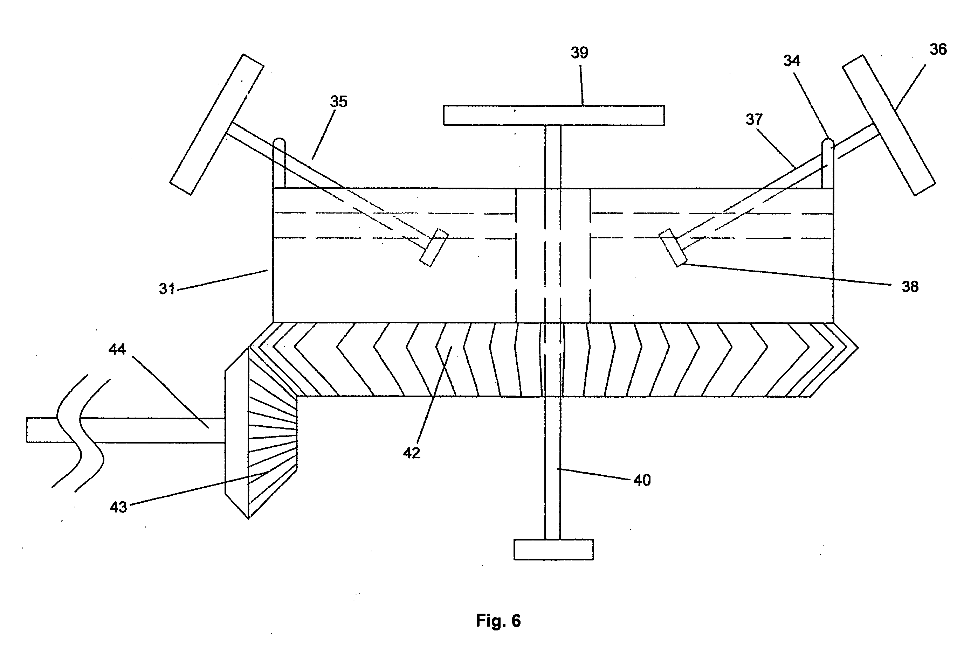

Referring to figures 3, 4, 5 and 6 the rotational torque generating means 15 is coupled to the flywheel 31 by the shaft extending vertically out of the rotational torque generating means 15. The flywheel 31 comprises a plurality of spokes 32 attached to a rim 33. At least two brackets 34 are fixed symmetrically opposite on the rim 33. Each bracket 34 is coupled to a gyroscope 35. The gyroscope 35 comprises a wheel 36 attached to the end of a gyroscope shaft 37 and a roller 38 attached to the opposite end of the gyroscope shaft 37.

The gyroscope shaft 37 is mounted on a bearing in the slot of the bracket 34. The bearing in the slot of the bracket 34 is provided with suspension means for positioning the gyroscope 35 for balancing, rotary and ascending/descending movements of the gyroscope 35. The preferred embodiment of the suspension means for positioning the gyroscope 35 is a pair of pins connecting the housing of the bearing to the bracket 34. When the flywheel 31 is stationary, the wheel 36 rests at an angle no more than 10° below the horizontal axis, thus lifting the roller 38 to rest against the stationary plane 39. The balancing of the wheel 36 thus is important to ensure the proper functioning of the gyroscope 35.

A rail 42 may be fixed to the rim 33 of the flywheel 31. The rail 42 engages with a transmission roller 43, whose axis of rotation intersects with that of the rail 42, preferably at 90°. A transmission shaft 44 is coupled to the transmission roller 43 via a bearing and connects the uninterrupted battery operated generator system 50 to a receiving system such as a vehicular or machinery transmission system, e.g. car transmission system.

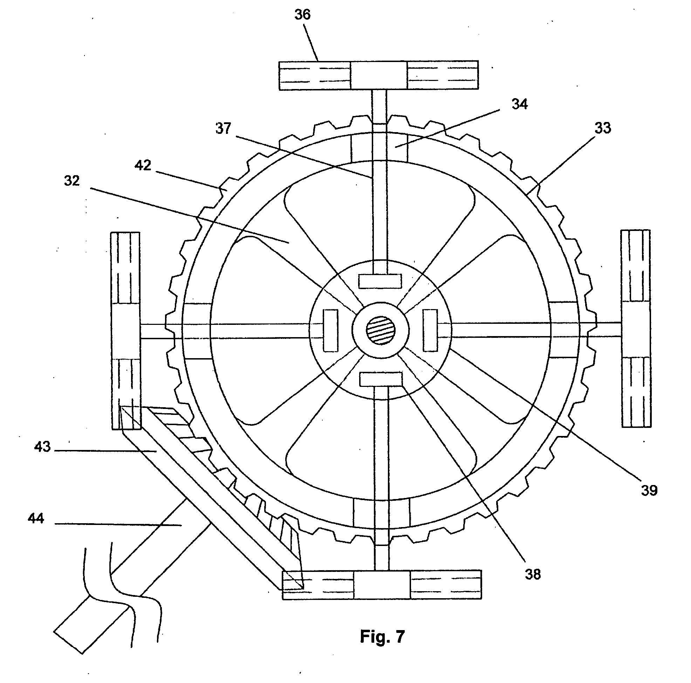

The operation of the uninterrupted battery operated generator system 50 will now be described with reference to Figs. 1 to 7.

To start the uninterrupted battery operated generator system 50 running, the user actuates an on-off switch 30 on the controller 10. Before the on-off switch 30 is actuated, the energy storage means 11, 12 are fully charged. When the on-off switch 30 is actuated, the controller 10 closes the supply switch 21 or 22, depending on the programming mode set into the controller 10.

For convenience in the description, we assume that supply switch 21 has been set to close initially. The closing of the supply switch 21 is followed instantly by the closing of motor switch 25 and charging switch 24 by the controller 10. On receiving power supply, the rotational torque generating means 15 is energised, converting electrical energy input from the energy storage means 11 into kinetic energy on the output, namely the rotation of the shaft 40 of the rotational torque generating means 15. The rotation of the shaft 40 of the rotational torque generating means 15 causes the flywheel 31 to rotate. The rotation of the flywheel 31 causes the roller 38 resting against the stationary plane 39 to rotate, resulting in the rotation of the gyroscope 35. As the gyroscope 35 rotates, the wheel 36 rotates and lifts, thus forcing the roller 38 to descend and disengage from the stationary plane 39. The rotation of the wheel 36 provides the flywheel 31 with greater momentum during its rotary movement, which enables the flywheel 31 to multiply kinetic energy. The storing and multiplying of kinetic energy enables the uninterrupted battery operated generator system 50 to produce a power output higher than the power input from the energy storage means 11, 12.

The kinetic energy stored and multiplied by the flywheel 31 is translated via the rotation of the shaft 40 of the rotational torque generating means 15 into rotational mechanical energy of the rotor of the alternator 16. Preferably, the shaft 40 of the rotational torque generating means 15 is coupled to the rotor of the alternator 16 by a pulley and belt transmission system. Preferably, the pulley coupled to the rotor of the alternator 16 has a diameter that is at least three times larger than that of the pulley at the rotational torque generating means 15. The shaft 40 of the rotational torque generating means 15 can therefore rotate at a speed that is greater by the same ratio than that of the rotor of the alternator 16 so as to give the alternator 16 a greater torque. It should be obvious to persons skilled in the art that the reverse arrangement, whereby the rotor of the alternator 16 rotates at a speed faster than that of the shaft 40 of the rotational torque generating means 15, can also be applied to the present invention, depending on the choice of alternator 16 and rotational torque generating means 15 used. The alternator 16 converts the kinetic energy from the rotor into electrical energy, which is fed to the load 18 or to the charging means 17 where appropriate.

The uninterrupted battery operated generator system 50 of the present invention can also be used to generate kinetic energy. In this embodiment, the flywheel 31 is mounted with a rail 42 along the circumference of its rim 33. The rail 42 engages with a transmission roller 43 such that the axis of rotation of the transmission roller 43 intersects with that of the rail 42. In the preferred embodiment, the axis of rotation of the transmission roller 43 intersects with that of the rail 42 at a right angle. The rail 42 and transmission roller 43 are preferably bevel gears. A transmission shaft 44 is coupled to the transmission roller 43 via bearings. When the flywheel 31 is in motion, the kinetic energy so produced is transferred by the rail 42 to the transmission roller 43. The rotational movement of the transmission roller 43 causes the transmission shaft 44 to rotate. The transmission shaft 44 then transfers kinetic energy produced by the uninterrupted battery operated generator system 50 to a receiving system such as vehicular or machinery transmission system. For example, the transmission shaft 44 may transfer the kinetic energy to a car transmission system.

A frequency sensor 14 is mounted on the alternator 16 to monitor the rotational speed of the rotor of the alternator 16. It should be obvious to someone skilled in the art that the frequency sensor 14 could also be mounted in the rotational torque generating means 15 to measure the rotational speed of the shaft 40 of the rotational torque generating means 15. The output of the frequency sensor 14 is connected to an input port of the controller 10 to regulate on-off of the motor switch 25. Thus, when the rotational speed detected by the frequency sensor 14 exceeds a stipulated value, the controller opens the motor switch 25 to de-energise the rotational torque generating means 15. Conversely, when the rotational speed detected by the frequency sensor 14 falls below a stipulated minimum, the controller closes the motor switch 25 to energise the rotational torque generating means 15. Hence, the input energy required for the operation of the uninterrupted battery operated generator system 50 is effectively regulated by the controller 10, motor switch 25 and frequency sensor 14.

As time goes, the energy stored in the first energy storage means 11 will deplete and the voltage across the output of the first energy storage means 11, as measured by the voltage sensor 13, will drop. When voltage across the output of the first energy storage means 11 drops to a predefined voltage level, the controller 10 causes supply switch 22 and charging switch 23 to close and instantly, the controller causes the supply switch 21 and charging switch 24 to open so that the necessary power for the operation of the uninterrupted battery operated generator system 50 will be sourced from the second energy storage means 12. As the second energy storage means 12 is connected into the system before the disconnection of the first energy storage means 11, the power supply to the load 18 would be continuous without interruption. Instantly after closing the supply switch 22, the controller 10 causes charging switch 26 to close, connecting the outputs of the alternator 16 to the inputs of the charging means 17. Simultaneously, the controller 10 causes charging switch 23 to close. In this way, part of the power converted from the second energy storage means 12 is used to supply load 18 and part for the charging of the first energy storage means 11. In this embodiment, the first energy storage means 11 are DC battery banks of the type with much shorter recharge time than the operating time. As a result, the first energy storage means 11 will be fully charged up before the power of the second energy storage means 12 is depleted. When the first energy storage means 11 is fully charged up, the controller 10 causes charging switch 26 and charging switch 23 to open. A similar process, involving supply switch 22 instead of supply switch 21 and charging switch 24 instead of charging switch 23, takes place when the second energy storage means 12 is depleted. Thus, the energy supply to the rotational torque generating means 15 is switched between the first energy storage means 11 and the second energy storage means 12 as and when required.

The load sensor 19 measures the load current drawn by the load 18. As described earlier, the output of the load sensor 19 is connected to an input port of the controller 10. When the controller 10 detects a low load current of a predetermined value, the controller 10 closes charging switch 26 and either charging switch 23 or 24 that is associated with the idling energy storage means 11 or 12, i.e. energy storage means 11 or 12 that is not supplying energy to the rotational torque generating means 15 at the time. This enables the charging of the idling energy storage means 11 or 12 while load 18 is drawing a low load current. When the controller 10 detects a high load current of a predetermined value, the controller 10 opens charging switch 26 and either charging switch 23 or 24 that is associated with the energy storage means 11 or 12 being charged at the time, so as to provide a full capacity load to load 18.

Additionally, if any component of the energy generator as shown in Fig. 3 fails, resulting in the overall failure of the energy generator, the controller 10 will then cause the energy supply from the energy storage means 11, 12 to supply energy to the load 18, bypassing the failed energy generator. This ensures that even if the energy generator components fail, the load 18 will still receive a supply of energy from the energy storage means 11, 12.

The above operating sequence will be repeated to generate environmentally friendly power until a component in the uninterrupted battery operated generator system 50 reaches its useful life span and that component can be selectively replaced to put the uninterrupted battery operated generator system 50 in operation again.

The above description is made with reference to two energy storage means 11, 12. It is obvious to those skilled in the art that the present invention can still operate if only one energy storage means is included. It is also obvious to those skilled in the art that three or more energy storage means could be included in the system to extend the operating time and service life of the uninterrupted battery operated generator system 50. The energy storage means 11, 12 can be in any form of energy storage arranged in series or parallel.

Although the present invention have been described in detail above with certain preferred embodiment, those skilled in the art will readily appreciate that many modifications are possible in the exemplary embodiment above without materially departing from the novel teachings of this invention. Some obvious modifications to the present invention include size, weight and form of the gyroscopes 35 and flywheel 31.

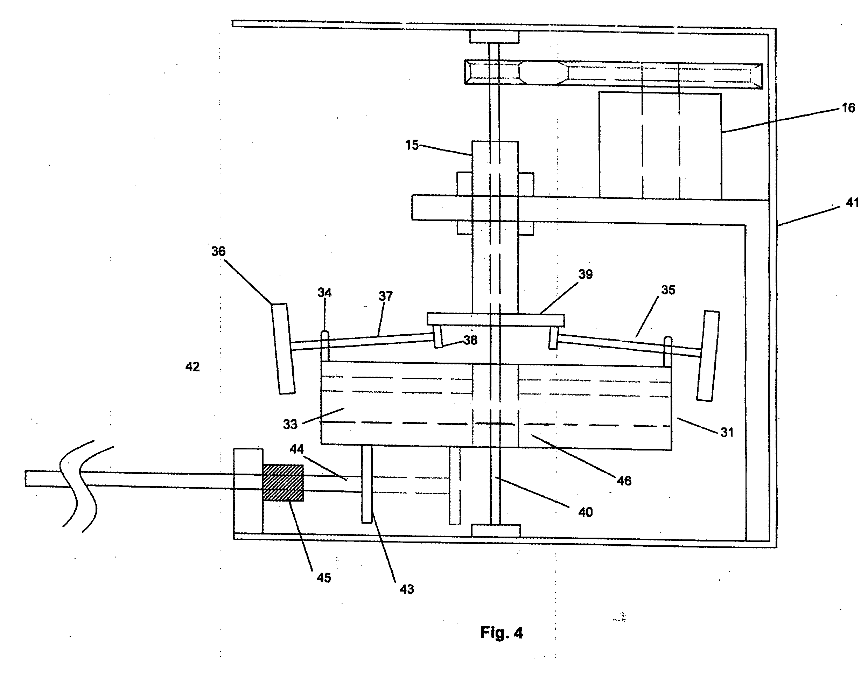

It will be obvious to persons skilled in the art that in another embodiment, the kinetic energy produced by the uninterrupted battery operated generator system 50 can also be utilised by the transmission roller 43 and transmission shaft 44 acting as a CVT transmission system, as shown in Fig. 4. In this embodiment, a plate 46 is fixed to the base of the flywheel 31 such that rotation of the flywheel 31 causes rotation of the plate 46. The transmission roller 43 is in contact with the plate 46 so that the rotational movement of the flywheel 31 causes the transmission roller 43 to rotate as well. An actuator 45 coupled to the transmission shaft 44 enables the transmission roller 43 to be pushed laterally along the radius of the plate 46 towards or away from the centre of the plate 46. As the circumference around the centre of the plate 46 is smaller than the outer circumference of the plate 46, the speed of rotation of the transmission roller 43 is altered as it moves along the radius of the plate 46. The kinetic energy from the flywheel 31 is thus variably transferred to the transmission roller 43 and from then on to the transmission shaft 44. The ratio of the diameters of the flywheel 31, transmission roller 43 and plate 46 can be adjusted to suit a variety of systems. In this way, the transmission roller 43 and transmission shaft 44 can act as a CVT transmission system for a variety of different vehicles.

It will also be obvious to persons skilled in the art that the method described herein for transferring the kinetic energy produced by the uninterrupted battery operated generator system 50 is but one of many possible arrangements. For example, it is possible to mount a belt and pulley system to the shaft 40 of the rotational torque generating means 15 to transfer the kinetic energy produced by the rotational movement of the shaft 40 to a receiving system. Accordingly, all such modifications are intended to be included within the scope of this invention as defined in the following claims or equivalent thereof.

## Claims

1. An uninterrupted battery operated generator system 50 comprising:
an energy storage means 11, 12;
a load 18 means for energy output connected to a controller 10;
a rotational torque generating means 15 with input connections to the energy storage means 11, 12 via supply switches 21, 22, a motor switch 25 and input connections to the controller 10;
an alternator 16, with the rotor of the alternator 16 mechanically coupled to the shaft 40 of the rotational torque generating means 15 and with the output of the alternator 16 connected to the load 18;
a flywheel 31 coupled to the shaft 40 of the rotational torque generating means 15 for storing and multiplying kinetic energy;
a rail 42 coupled to the rim 33 of the flywheel 31, means for transferring kinetic energy to a transmission roller 43;
a plate 46 mounted to the base of the flywheel 31, means for transferring kinetic energy to a transmission roller 43;
a transmission roller 43 engaging with the rail 42 or plate 46 to receive the kinetic energy produced by the rotational movement of the flywheel 31;
a transmission shaft 44 coupled to the transmission roller 43, means for transferring the rotational kinetic energy to a receiving system;
at least a pair of gyroscopes 35 coupled to the flywheel 31 to provide greater momentum to the flywheel 31 during its rotary movement;
a bracket 34 mounted onto the flywheel 31 means for suspension of the gyroscopes 35;
a voltage sensor 13 to monitor the voltage at the input terminals of the rotational torque generating means 15;
a frequency sensor 14 to monitor the rotational speed of either the shaft 40 of the rotational torque generating means 15 or the rotor of the alternator 16;
a load sensor 19 to measure the load current drawn by the load 18;
a charging means 17 for energy storage means 11, 12 with the inputs connected to the outputs of the alternator 16 and with the outputs connected to the energy storage means 11, 12 via charging switches 23, 24;
a controller 10 for controlling the operation of the uninterrupted battery operated generator system 50 via control on the opening and closing of supply switches 21, 22, motor switch 25, and charging switches 23, 24, 26;
an on-off switch 30 for the user to switch on and off of the uninterrupted battery operated generator system 50; and
wherein the kinetic energy stored by the flywheel 31 and multiplied by the gyroscopes 35 is transferred by the shaft 40 of the rotational torque generating means 15 to the rotor of the alternator 16, thereby allowing the alternator 16 to convert kinetic energy into electrical energy, and wherein kinetic energy generated by the flywheel 31 is transmitted via the rail 42, transmission roller 43 and transmission shaft 44 to a receiving system.

2. An uninterrupted battery operated generator system 50 as in claim 1, wherein the energy storage means 11, 12 comprise of a first energy storage means 11 and a second energy storage means 12.

3. An uninterrupted battery operated generator system 50 as in claim 1 or 2, wherein the energy storage means 11, 12 comprise of DC battery banks, whereby the DC battery banks have recharging time that is shorter than the running time.

4. An uninterrupted battery operated generator system 50 as in claim 1 or 3, wherein the system includes at least one energy storage means 11, 12.

5. An uninterrupted battery operated generator system 50 as in claim 1, wherein the energy storage means 11, 12 is a super capacitor bank or ultra capacitor bank.

6. An uninterrupted battery operated generator system 50 as in claim 1, wherein the rotor of the alternator 16 is mechanically coupled to the shaft 40 of the rotational torque generating means 15 by a pulley and belt transmission system or by step up/down gears.

7. An uninterrupted battery operated generator system 50 as in claim 1, wherein the speed of the shaft 40 of the rotational torque generating means 15 is at least three times the speed of the rotor of the alternator 16 or vice versa.

8. An uninterrupted battery operated generator system 50 as in claim 7, wherein the ratio of the speed of the rotor of the alternator 16 to that of the shaft 40 of the rotational torque generating means 15 is controlled by way of sizing the diameter of the pulleys or gears coupled to the rotor and shaft 40 respectively.

9. An uninterrupted battery operated generator system 50 as in claim 1, wherein the rotational torque generating means 15 is coupled to a flywheel 31 to store kinetic energy when the flywheel 31 reaches a stipulated speed.

10. An uninterrupted battery operated generator system 50 as in claim 1 or 9, wherein at least a pair of gyroscopes 35 is coupled to the flywheel 31 to provide greater momentum to the flywheel 31 during its rotary movement such as to enable the flywheel 31 to multiply kinetic energy.

11. An uninterrupted battery operated generator system 50 as in claim 1 or 10, wherein said bracket 34 comprising of a bearing mounted within a slot of a bracket 34 is coupled to the flywheel 31 for positioning and balancing the gyroscope 35 and enabling the rotary and ascending/descending movements of the gyroscope 35.

12. An uninterrupted battery operated generator system 50 as in claim 1, wherein the rail 42 and transmission roller 43 are bevel gears positioned such that their axes of rotation intersect to transfer kinetic energy through the transmission shaft 44 to a receiving system.

13. An uninterrupted battery operated generator system 50 as in claim 1, wherein the rail 42 is preferably, but not limited to, a gear and can be any means suitable for guiding the rotational movement of the transmission roller 43.

14. An uninterrupted battery operated generator system 50 as in claim 1, wherein the rail 42, transmission roller 43 and transmission shaft 44 can be substituted with any type of transmission means known in the art for transferring rotational kinetic energy.

15. An uninterrupted battery operated generator system 50 as in claim 1 that is further provided with a frequency sensor 14, the frequency sensor 14 being mounted on the rotational torque generating means 15 or on the alternator 16 to monitor the rotational speed of either the shaft 40 of the rotational torque generating means 15 or the rotor of the alternator 16 respectively to provide input to the controller 10 to regulate on-off of the motor switch 25, and therefore excitation or de-excitation of the rotational torque generating means 15, and hence minimising power input into the rotational torque generating means 15 in generating electricity.

16. An uninterrupted battery operated generator system 50 as in claim 1 or 15 wherein the uninterrupted battery operated generator system 50 is further provided with a load sensor 19, the load sensor 19 being adapted to measure the load current drawn by the load 18, with the output of the load sensor 19 connected to the input port of the controller 10 to provide an input signal to the controller 10 to send appropriate command to effect charging of the idling energy storage means 11, 12 when the load is low, or to effect enabling the load 18 to utilise its full power when needed.

17. An uninterrupted battery operated generator system 50 as in claim 1, wherein the alternator 16 is a single-phase alternator, three-phase alternator, or permanent magnet alternator.

18. An uninterrupted battery operated generator system 50 as in claim 1, wherein the controller 10 is a discrete digital circuit, a discrete analogue circuit, a hybrid discrete analogue and digital circuit, a digital microprocessor or a digital microcontroller.

19. An uninterrupted battery operated generator system 50 as in claim 1, wherein the rotational torque generating means 15 may be a DC motor or an AC motor provided with an inverter, permanent magnet motor or induction motor.

20. An uninterrupted battery operated generator system 50 as in claim 1, wherein the voltage sensor 13 connected to the controller 10 measures the voltage across the output terminals of the energy storage means such as to detect when said voltage drops below a predefined voltage designed or preprogrammed into the controller 10, whereby said voltage is deemed depleted.

21. An uninterrupted battery operated generator system 50 as in claim 1, wherein power supply to the controller 10 may be an internal power source such as DC battery or may be power drawn from the energy storage means 11, 12 operating at the time.
